# EUROPÄISCHE PATENTSCHRIFT

(11) **EP 3 105 702 B1**
(45) Veröffentlichungstag und Bekanntmachung des Hinweises auf die Patenterteilung: **20.11.2019**
(21) Anmeldenummer: 15703879.5
(22) Anmeldetag: 09.02.2015
(51) Int. Cl.: G06F 21/60, G06F 21/85

(54) **MIKROPROZESSORSYSTEM**
MICROPROCESSOR SYSTEM
SYSTÈME À MICROPROCESSEUR

(30) Priorität: 11.02.2014 DE 102014001843
(43) Veröffentlichungstag der Anmeldung: 21.12.2016
(73) Patentinhaber: Giesecke+Devrient Mobile Security GmbH, 81677 München (DE)
(72) Erfinder: MATHÉ, Werner, 82216 Maisach (DE); SCHRÖDER, Sönke, 80637 München (DE)
(86) Internationale Anmeldenummer: PCT/EP2015/000269
(87) Internationale Veröffentlichungsnummer: WO 2015/120972

(56) Entgegenhaltungen:
- WO-A2-2012/113547
- US-A1- 2009 249 462
- US-A1- 2013 301 830
- US-A1- 2014 007 221
- US-A1- 2014 013 406

## Beschreibung

### Technisches Gebiet

Die vorliegende Erfindung betrifft ein Mikroprozessorsystem für ein mobiles Endgerät. Das Mikroprozessorsystem weist ein Normalbetriebssystem und ein Sicherheitsbetriebssystem auf. Das Normalbetriebssystem ist zum Erzeugen und Unterhalten einer unsicheren Laufzeitumgebung (REE) eingerichtet und das Sicherheitsbetriebssystem ist zum Erzeugen und Unterhalten einer gesicherten Laufzeitumgebung (TEE) eingerichtet.

Ein Mikroprozessorsystem umfasst einen Mikroprozessor und einen oder mehrere flüchtige und nichtflüchtige Speicher, insbesondere zumindest einen Betriebssystemspeicher, in dem ein Betriebssystem abgespeichert ist, einen oder mehrere Applikationsspeicher, in denen durch den Mikroprozessor unter Steuerung des Betriebssystems ausführbare Applikationen abgespeichert sind, und einen Arbeitsspeicher, in dem durch den Mikroprozessor zu bearbeitende Daten ablegbar sind. Das Betriebssystem erzeugt und unterhält während seines Betriebs eine Laufzeitumgebung, in der die Applikationen auf dem Mikroprozessorsystem lauffähig sind. Das Mikroprozessorsystem ist vorzugsweise auf einem einzelnen Chip, bspw. einem Halbleiterchip, implementiert. Alternativ kann das Mikroprozessorsystem auch auf mehreren, miteinander verbundenen Chips implementiert sein.

### Stand der Technik

Aus der DE 10 2011 115 135 A1 ist ein Mikroprozessorsystem mit einem Normalbetriebssystem und einem Sicherheitsbetriebssystem bekannt. Bei dem Mikroprozessorsystem ist zwischen dem Sicherheitsbetriebssystem und dem Normalbetriebssystem eine Filter- Schnittstelle implementiert, die dazu eingerichtet ist, die Kommunikation zwischen der unsicheren Laufzeitumgebung und der gesicherten Laufzeitumgebung der beiden Betriebssysteme auf einer von der Betriebssystemebene unterschiedlichen Ebene gesichert zu steuern.

Aus der DE 197 26 079 B4 ist eine Audiosignalverarbeitungsvorrichtung für ein schnurloses Kommunikationssystem bekannt, bei der Signale zwischen einer Basisstation und einem Handapparat eines schnurlosen Telefonsystems bedarfsgemäß mit einem Verwürfler und einem Entwürfler verschlüsselt und entschlüsselt werden können. Dadurch wird ein Abhören der zwischen Basisstation und Handapparat über eine Luftschnittstelle ausgetauschten Daten erschwert.

Weiterhin ist aus der DE 10 2011 086 509 A1 eine Kommunikationsvorrichtung zum Einsatz in der Marine bekannt, bei der zwei Sende- und Empfangseinrichtungen vorgesehen sind, die zur Übertragung von zwei Hörkanälen und einem Sprechkanal eingerichtet sind. Zur Sicherstellung einer verschlüsselten Übertragung sind die Sende- und Empfangseinrichtungen jeweils mit Verschlüsselungs- und Entschlüsselungseinrichtung zur Realisierung einer verschlüsselten Signalübertragung versehen.

Im Bereich der mobilen Telekommunikation mittels Mobilfunkgeräten, insbesondere mittels Smartphones, ist es bekannt Sprachdaten, die zwischen zwei Gesprächsteilnehmern übertragen werden, zu verschlüsseln. Zur Verschlüsselung der ' Daten können softwaremäßige und/oder hardwaremäßige Maßnahmen in den Mobilfunkgeräten angewendet werden. Mobilfunkgeräte, bei denen die Verschlüsselung mittels hardwaremäßiger Maßnahmen erfolgt, haben den Nachteil, dass ihr Anschaffungspreis deutlich über dem normaler Mobilfunkgeräte liegt. Mobilfunkgeräte, bei denen Daten, insbesondere Sprachdaten, durch softwaremäßige oder hardwaremäßige Maßnahmen verschlüsselt werden, weisen den Nachteil auf, dass vor allem Sprachdaten, die an eine Spracheingabeeinrichtung (Mikrofon) und/oder eine Sprachausgabeeinrichtung (Lautsprecher, Hörmuschel) übertragen werden, innerhalb des Mobilfunkgeräts an diese Einrichtungen unverschlüsselt übertragen werden. Das Betriebssystem und/oder eine auf dem Mobilfunkgerät installierte Applikation hat deshalb die Möglichkeit auf diesen Datenstrom zu zugreifen und die Sprachdaten zu analysieren und ggf. weiterzuverwenden. Gerade Mobilfunkbetriebssysteme, die gratis zur Verfügung gestellt werden, stehen oft in dem Ruf, dass sie Daten des Nutzers sammeln und dazu verwenden, um Informationen über den Nutzer zu erhalten, um dem Nutzer auf ihn "zugeschneiderte" Verkaufsangebote zu kommen zu lassen.

### Darstellung der Erfindung

Der Erfindung liegt die Aufgabe zugrunde ein Mikroprozessorsystem zur Verfügung zu stellen, das die bekannten Probleme aus dem Stand der Technik löst und ferner dazu geeignet ist, eine sichere Übertragung von Sprachdaten in einem mobilen Endgerät zu ermöglichen.

Die Lösung der Aufgabe erfolgt durch den Gegenstand des Patentanspruchs 1. Bevorzugte Ausgestaltungen des erfindungsgemäßen Mikroprozessorsystems ergeben sich aus den Unteransprüchen.

Der Erfindung liegt der Gedanke zugrunde mittels einer gesicherten Laufzeitumgebung eine direkte Übertragung von Sprachdaten zwischen einem sicheren Element und der Spracheingabeeinrichtung und/oder der Sprachausgabeeinrichtung zu ermöglichen.

Demgemäß umfasst ein Mikroprozessorsystem für ein mobiles Endgerät ein Normalbetriebssystem, das zum Erzeugen und/oder Unterhalten einer unsicheren Laufzeitumgebung (Rich Execution Environment; REE) eingerichtet ist, ein Sicherheitsbetriebssystem, das zum Erzeugen und/oder Unterhalten einer gesicherten Laufzeitumgebung (Trusted Execution Environment; TEE) eingerichtet ist, und eine Spracheingabeeinrichtung, insbesondere ein Mikrofon, und eine Sprachausgabeeinrichtung, insbesondere einen Lautsprecher. Das Sicherheitsbetriebssystem ist dazu eingerichtet einen sicheren Kanal zwischen einem sicheren Element und der Spracheingabeeinrichtung und/oder der Sprachausgabeeinrichtung aufzubauen.

Mikroprozessorsysteme, mit denen es möglich ist, zwei Betriebssysteme parallel zu betreiben, sind bspw. unter der Bezeichnung "ARM-Trustzone-Architektur" bekannt. Eine geteilte Laufzeit- Architektur weist dabei für gewöhnlich eine unsichere Laufzeitumgebung und eine sichere bzw. vertrauenswürdige Laufzeitumgebung auf. Die unsichere Laufzeitumgebung wird durch ein Normalbetriebssystem gesteuert und die sichere Laufzeitumgebung wird durch ein Sicherheitsbetriebssystem gesteuert.

Das Normalbetriebssystem kann bspw. ein gängiges Betriebssystem, wie Android, Windows Phone, Symbian oder dergleichen seien.

Das Sicherheitsbetriebssystem kann bspw. ein Betriebssystem sein, wie es von der Anmelderin unter dem Markennamen MOBICORE vertrieben wird.

Mit dem Mikroprozessorsystem der vorliegenden Patentanmeldung ist es möglich mittels des Sicherheitsbetriebssystems einen sicheren Kanal zwischen einem sicheren Element und der Spracheingabeeinrichtung und/oder der Sprachausgabeeinrichtung aufzubauen. Bei mobilen Endgeräten aus dem Stand der Technik ist für die Handhabung von Sprachdaten das Normalbetriebssystem verantwortlich. Folglich ist es möglich, dass Sprachdaten, die innerhalb des Endgerätes übertragen werden, von dem Normalbetriebssystem oder einer in diesem Normalbetriebssystem installierten Applikation überwacht und abgehört werden. Hier greift die vorliegende Erfindung an, da durch den Aufbau des sicheren Kanals mittels des Sicherheitsbetriebssystems zwischen dem sicheren Element und der Spracheingabeeinrichtung und/oder der Sprachausgabeeinrichtung ein "Abhören" bzw. Abgreifen der Sprachdaten durch das Normalbetriebssystem nicht mehr möglich ist.

Gemäß einer Ausführungsform wird der sichere Kanal dadurch aufgebaut, dass eine hardwaremäßige Verbindung zwischen dem Normalbetriebssystem und der Spracheingabeeinrichtung und/oder der Sprachausgabeeinrichtung unterbrochen wird. Auf diese Weise kann sichergestellt werden, dass das Normalbetriebssystem keinen Zugang mehr zu dem Sprachdatenfluss hat. Somit wird ein unbefugter Zugriff auf die Sprachdaten bzw. auf den Sprachdatenfluss durch das Normalbetriebssystem mit Vorteil unterbunden.

Der sichere Kanal kann dadurch aufgebaut werden, dass gesteuert durch das Sicherheitsbetriebssystem eine direkte Verbindung zwischen dem sicheren Element und der Spracheingabeeinrichtung und/oder der Sprachausgabeeinrichtung aufgebaut wird. Auf diese Weise ist es möglich die Sprachdaten vollständig von dem Normalbetriebssystem fernzuhalten. Somit wird die Sicherheit bei der Übertragung von Sprachdaten wesentlich erhöht.

Gemäß einer weiteren bevorzugten Ausführungsform ist das sichere Element derart mit einem Anzeigemittel, insbesondere einer LED, verbunden, dass das Anzeigemittel den Status des sicheren Kanals anzeigt. Auf diese Weise ist es für einen Nutzer der mobilen Einrichtung ohne großen Aufwand möglich zu erkennen, ob die Sprachdaten über den sicheren Kanal übertragen werden. Das Anzeigemittel wird bevorzugt im Bereich des Gehäuses des mobilen Endgerätes angebracht. Durch direktes Koppeln des Anzeigemittels mit dem sicheren Element kann sichergestellt werden, dass das Anzeigemittel nicht durch das Normalbetriebssystem oder eine Schadsoftware (Trojaner) manipuliert wird. Ferner weist das sichere Element eines mobilen Endgerätes normalerweise zusätzliche PINs auf, die zur Ansteuerung des Anzeigemittels, insbesondere der LED, verwendet werden können.

Bei dem sicheren Element kann es sich gemäß einer Ausführungsform der vorliegenden Erfindung um einen fest in dem mobilen Endgerät eingebauten Chip (embedded Universal Integrated Circuit Card; eUICC), eine SIM-Karte, eine eingebettete SIM-Karte und/oder eine einsteckbare microSD-Karte handeln.

Bei dem mobilen Endgerät kann es sich um ein Mobilfunkgerät, ein Smartphone, einen Personal Digital Assistant (PDA) und/oder einen TabletPC mit Telefonfunktion handeln.

Gemäß einer weiteren Ausführungsform erfolgt vor dem Aufbau des sicheren Kanals die Übertragung des Sprachdatenstroms zwischen dem sicheren Element und der Spracheingabeeinrichtung und/oder der Sprachausgabeeinrichtung über eine Vollduplex-Schnittstelle, insbesondere über eine SPI-Schnittstelle des Normalbetriebssystems. Diese Schnittstelle eignet sich besonders gut zur Übertragung von Sprachdatenströmen.

Ferner kann gemäß einer Ausführungsform ein Sprachdatenstrom über das sichere Element (20) zu der Spracheingabeeinrichtung (10) und/oder zu der Sprachausgabeeinrichtung (12) geleitet werden. Dies kann unabhängig davon erfolgen, ob der Sprachdatenstrom in der unsicheren Laufzeitumgebung und/oder in der sicheren Laufzeitumgebung über das sichere Element (20) geleitet wird. Somit ist es mit Vorteil möglich das sichere Element in die Weiterleitung bzw. Übermittlung von Sprachdatenströmen mit einzubeziehen. Die Rechenleistung eines sicheren Elements ist dazu ausreichend.

Bei der Spracheingabeeinrichtung kann es sich gemäß einer besonderen bevorzugten Ausführungsform um ein Mikrofon des mobilen Endgeräts handeln. Bei der Sprachausgabeeinrichtung kann es sich um einen Lautsprecher, insbesondere eine Hörmuschel des Endgeräts oder den in das Endgerät integrierten Lautsprecher handeln.

### Kurze Beschreibung der Zeichnungen

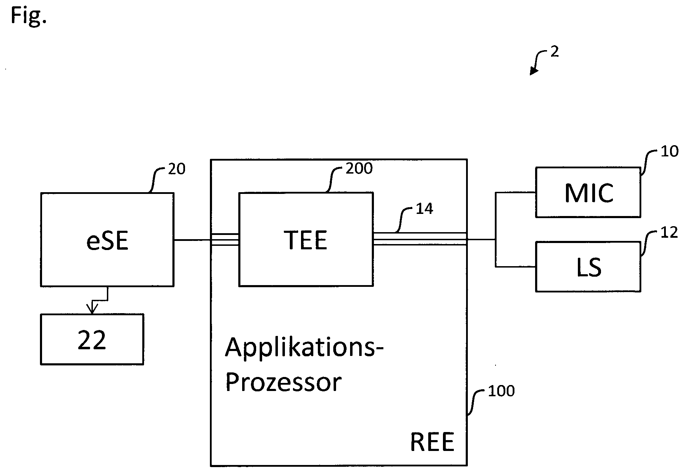

Die Figur zeigt ein Blockdiagramm, das die wesentlichen Elemente eines mobilen Endgerätes mit einem erfindungsgemäßen Mikroprozessorsystem darstellt.

### Ausführliche Beschreibung bevorzugter Ausführungsformen der Erfindung

Im Folgenden wird die Erfindung unter Bezugnahme auf die Zeichnungen anhand eines Ausführungsbeispiels beschrieben.

Die Figur zeigt schematisch ein mobiles Endgerät 2, das bspw. als Mobilfunkgerät, Smartphone, Personal Digital Assistant (PDA) und/oder als TabletPC ausgeführt sein kann. Das mobile Endgerät 2 ist mit einer Spracheingabeeinrichtung 10 und einer Sprachausgabeeinrichtung 12 versehen. Die Spracheingabeeinrichtung 10 ist in dem gezeigten Ausführungsbeispiel als im Gehäuse des Endgeräts 2 verbautes Mikrofon ausgeführt. Die Sprachausgabeeinrichtung 12 ist in dem gezeigten Ausführungsbeispiel als "Hörmuschel" oder als in das Gehäuse integrierter Lautsprecher ausgeführt.

Das mobile Endgerät 2 ist mit einem Normalbetriebssystem 100 und einem Sicherheitsbetriebssystem 200 versehen. Das Normalbetriebssystem 100 ist zum Erzeugen und Unterhalten einer unsicheren Laufzeitumgebung (REE) eingerichtet. Das Sicherheitsbetriebssystem 200 ist zum Erzeugen und Unterhalten einer gesicherten Laufzeitumgebung (TEE) eingerichtet.

In dem Normalbetriebssystem 100 laufen Applikationen, die keine oder nur zu einem geringen Teil sicherheitskritischen Funktionen ausüben. Zum Verwalten der Applikationen wird auf einem Applikationsprozessor ein Normalbetriebssystem 100 betrieben.

Das Sicherheitsbetriebssystem 200 wird in der gesicherten Laufzeitumgebung TEE (Trusted Execution Environment) des Applikationsprozessors betrieben. In dieser gesicherten Laufzeitumgebung TEE werden Applikationen ausgeführt, die im Vergleich zu dem Normalbetriebssystem 100 höhere Sicherheitsanforderungen aufweisen. Solche Applikationen werden auch als "Trustlet" bezeichnet.

Ferner ist in dem Endgerät 2 ein sicheres Element 20 vorgesehen. Das sichere Element 20 kann als fest in dem mobilen Endgerät eingebauter Chip (eUICC) als SIM-Karte, als eingebettete SIM-Karte und/oder als einsteckbare microSD-Karte ausgeführt sein. Bei dem sicheren Element 20 handelt es sich um einen Mikroprozessor mit Speicher, das den Nutzer bei der jeweiligen Gegenstelle, beispielsweise dem MNO (Mobil Network Operator), authentisiert und Daten manipulationssicher speichert. Das sichere Element 20 bildet einen "Datentresor" im Endgerät 2, der weder von dem Normalbetriebssystem 100 noch von dem Sicherheitsbetriebssystem 200 eingesehen und verändert werden kann.

Wird ein Gespräch mit dem Endgerät 2 unter Verwendung des Normalbetriebssystem 100 aufgebaut, so besteht die Gefahr, dass das Normalbetriebssystem 100 bzw. eine darin installierte Applikation die von der Spracheingabeeinrichtung 10 kommenden und zu der Sprachausgabeeinrichtung 12 gehenden Sprachdatenströme "abhören" bzw. mitlesen kann. Das Normalbetriebssystem 100 könnte somit die Sprachdatenströme auswerten und die daraus gewonnenen Informationen dazu verwenden, um Informationen über den Nutzer des mobilen Endgerätes 2 zu gewinnen.

Gemäß der Erfindung ist vorgesehen, dass beim Aufbau eines Gesprächs das Sicherheitsbetriebssystem 200 einen sicheren Kanal 14 zwischen dem sicheren Element 20 und der Spracheingabeeinrichtung 10 und/oder der Sprachausgabeeinrichtung 12 aufbaut. Dazu wird eine bestehende hardwaremäßige Verbindung zwischen dem Normalbetriebssystem 100 und der Spracheingabeeinrichtung und/oder der Sprachausgabeeinrichtung 12 unterbrochen. Getriggert durch das Sicherheitsbetriebssystem 200 und/oder eine Applikation (Trustlet) des Sicherheitsbetriebssystems 200 wird sodann eine Verbindung zwischen dem sicheren Element 20 und der Spracheingabeeinrichtung 10 und/oder der Sprachausgabeeinrichtung 12 aufgebaut, indem das Sicherheitsbetriebssystem 200 den Kanal 14 zu der Spracheingabeeinrichtung 10 und der Sprachausgabeeinrichtung 12 reserviert. Das Sicherheitsbetriebssystem 200 und/oder die Applikation (Trustlet) erzeugt als dann die erforderlichen sicheren Kanäle zum sicheren Element 20. Der Gesprächsaufbau kann auf herkömmliche Weise über eine "unsichere Verbindung" erfolgen. Sobald die Gesprächsverbindung aufgebaut ist, wird der Gesprächsdatenstrom von und zu dem Gesprächspartner mit den Kanälen zum sicheren Element verbunden und die Spracheingabeeinrichtung 10 sowie die Sprachausgabeeinrichtung 12 werden über den sicheren Kanal 14 mit dem sicheren Element verbunden. Auf diese Weise wird sichergestellt, dass das Normalbetriebssystem 100 keinen Zugriff auf die über den sicheren Kanal 14 übertragenen Sprachdaten hat. Somit ist eine sichere Handhabung der Sprachdaten innerhalb des mobilen Endgerätes 2.

Damit der Nutzer des mobilen Endgerätes 2 stets in Kenntnis darüber ist, ob der sichere Kanal 14 aufgebaut ist oder nicht, ist in dem gezeigten Ausführungsbeispiel das sichere Element mit einem Anzeigemittel 22 versehen. Das Anzeigemittel 22 ist direkt mit dem sicheren Element 20 verbunden. Dazu können geeigneterweise freie PIN-Anschlüsse des sicheren Elementes 20 verwendet werden. Das Anzeigemittel 22 ist in dem gezeigten Ausführungsbeispiel als Leuchtdiode ausgeführt und wird bevorzugt an dem Gehäuse der mobilen Einrichtung angebracht. Wenn der sichere Kanal 14 ordnungsgemäß aufgebaut wurde, kann die Leuchtdiode (LED) beispielsweise grün leuchten, um dies zu signalisieren. Wenn kein sicherer Kanal 14 aufgebaut ist, kann das Anzeigemittel 22 bspw. rot leuchten. So weiß der Nutzer des Endgerätes 2 stets über den Zustand des sicheren Kanals Bescheid.

Auf diese Weise kann sichergestellt werden, dass der Sprachdatenstrom nicht an einer anderen Stelle von dem Normalbetriebssystem abgezweigt wird. Ferner erhält der Nutzer des mobilen Endgerätes 2 eine verlässliche, nicht vom Applikations-/Normalbetriebssystem 100 manipulierbare Anzeige, ob ein sicherer Kanal 14 aufgebaut wurde oder nicht.

## Patentansprüche

1. Mikroprozessorsystem für ein mobiles Endgerät (2), aufweisend:
- ein Normalbetriebssystem (100), das zum Erzeugen und Unterhalten einer unsicheren Laufzeitumgebung (REE) eingerichtet ist,
- ein Sicherheitsbetriebssystem (200), das zum Erzeugen und Unterhalten einer gesicherten Laufzeitumgebung (TEE) eingerichtet ist, und
- eine Spracheingabeeinrichtung (10) und eine Sprachausgabeeinrichtung (12),
wobei das Sicherheitsbetriebssystem (200) dazu eingerichtet ist einen sicheren Kanal (14) zwischen einem sicheren Element (20) und
der Spracheingabeeinrichtung (10) und/oder
der Sprachausgabeeinrichtung (12) aufzubauen,
wobei vor dem Aufbau des sicheren Kanals (14) ein Sprachdatenstrom zu dem sicheren Element (20) über eine Vollduplexschnittstelle des Normalbetriebssystems (100) übertragbar ist.

2. Mikroprozessorsystem nach Anspruch 1, **dadurch gekennzeichnet, dass** der sichere Kanal (14) dadurch aufbaubar ist, dass eine hardwaremäßige Verbindung zwischen dem Normalbetriebssystem (100) und der Spracheingabeeinrichtung (10) und/oder der Sprachausgabeeinrichtung (12) unterbrochen wird.

3. Mikroprozessorsystem nach Anspruch 1 oder 2, **dadurch gekennzeichnet, dass** der sichere Kanal (14) dadurch aufbaubar ist, dass über das Sicherheitsbetriebssystem (200) eine direkte Verbindung zwischen dem sicheren Element (20) und der Spracheingabeeinrichtung (10) und/oder der Sprachausgabeeinrichtung (12) aufgebaut wird.

4. Mikroprozessorsystem nach einem der vorhergehenden Ansprüche, **dadurch gekennzeichnet, dass** das sichere Element (20) derart mit einem Anzeigemittel (22) verbunden ist, dass das Anzeigemittel (22) den Status des sichern Kanals (14) anzeigt.

5. Mikroprozessorsystem nach einem der vorhergehenden Ansprüche, **dadurch gekennzeichnet, dass** es sich bei dem Anzeigemittel um eine LED handelt.

6. Mikroprozessorsystem nach einem der vorhergehenden Ansprüche, **dadurch gekennzeichnet, dass** es sich bei dem sicheren Element (20) um einen fest in das mobile Endgerät (2) eingebauten Chip, eine eUICC, eine SIM-Karte, eine eingebettete SIM-Karte und/oder eine einsteckbare microSD-Karte handelt.

7. Mikroprozessorsystem nach einem der vorhergehenden Ansprüche, **dadurch gekennzeichnet, dass** es sich bei dem mobilen Endgerät um ein Mobilfunkgerät, ein Smartphone, einen Personal Digital Assistant und/oder einen TabletPC handelt.

8. Mikroprozessorsystem nach einem der vorhergehenden Ansprüche, **dadurch gekennzeichnet, dass** es sich bei der Vollduplexschnittstelle um eine SPI-Schnittstelle handelt.

9. Mikroprozessorsystem nach einem der vorhergehenden Ansprüche, **dadurch gekennzeichnet, dass** es sich bei der Spracheingabeeinrichtung (10) um ein Mikrofon des mobilen Endgeräts handelt.

10. Mikroprozessorsystem nach einem der vorhergehenden Ansprüche, **dadurch gekennzeichnet, dass** es sich bei der Sprachausgabeeinrichtung (12) um einen Lautsprecher handelt.

11. Endgerät mit einem Mikroprozessorsystem nach einem der vorhergehenden Ansprüche.

## Claims

1. A microprocessor system of a mobile end device (2), having:
- a normal operating system (100) which is devised for generating and maintaining an insecure runtime environment (REE),
- a security operating system (200) which is devised for generating and maintaining a secured runtime environment (TEE), and
- a voice input device (10) and a voice output device (12),
wherein the security operating system (200) is devised to establish a secure channel (14) between a secure element (20) and
the voice input device (10) and/or
the voice output device (12),
wherein before the establishment of the secure channel (14) a speech data stream is transferable to the secure element (20) over a full-duplex interface of the normal operating system (100).

2. The microprocessor system according to claim 1, **characterized in that** the secure channel (14) is establishable by the fact that a hardware connection is interrupted between the normal operating system (100) and the voice input device (10) and/or the voice output device (12).

3. The microprocessor system according to claim 1 or 2, **characterized in that** the secure channel (14) is establishable by the fact that via the security operating system (200) a direct connection is established between the secure element (20) and the voice input device (10) and/or the voice output device (12).

4. The microprocessor system according to any of the previous claims, **characterized in that** the secure element (20) is connected to a display means (22) such that the display means (22) displays the status the secure of channel (14).

5. The microprocessor system according to any of the previous claims, **characterized in that** the display means is an LED.

6. The microprocessor system according to any of the previous claims, **characterized in that** the secure element (20) is a chip firmly incorporated into the mobile end device (2), an eUICC, a SIM card, an embedded SIM card and/or an insertable microSD card.

7. The microprocessor system according to any of the previous claims, **characterized in that** the mobile end device is a mobile communication device, a smartphone, a Personal Digital Assistant and/or a tablet PC.

8. The microprocessor system according to any of the previous claims, **characterized in that** the full-duplex interface is an SPI interface.

9. The microprocessor system according to any of the previous claims, **characterized in that** the voice input device (10) is a microphone of the mobile end device.

10. The microprocessor system according to any of the previous claims, **characterized in that** the voice output device (12) is a loudspeaker.

11. An end device having a microprocessor system according to any of the previous claims.

## Revendications

1. Système à microprocesseur destiné à un terminal (2) mobile, comprenant :
- un système d'exploitation normale (100) conçu pour générer et maintenir un environnement d'exécution (REE) non sécurisé,
- un système d'exploitation de sécurité (200) conçu pour générer et maintenir un environnement d'exécution (TEE) sécurisé, et
- un équipement à entrée vocale (10) et un équipement à sortie vocale (12),
cependant que le système d'exploitation de sécurité (200) est conçu pour établir un canal (14) sécurisé entre un élément (20) sécurisé et l'équipement à entrée vocale (10) et/ou l'équipement à sortie vocale (12),
cependant que, avant l'établissement du canal (14) sécurisé, un flux de données vocales peut être transmis vers l'élément (20) sécurisé par l'intermédiaire d'une interface full-duplex du système d'exploitation normale (100).

2. Système à microprocesseur selon la revendication 1, **caractérisé en ce que** le canal (14) sécurisé peut être établi **en ce qu'**une connexion matérielle entre le système d'exploitation normale (100) et l'équipement à entrée vocale (10) et/ou l'équipement à sortie vocale (12) est interrompue.

3. Système à microprocesseur selon la revendication 1 ou 2, **caractérisé en ce que** le canal (14) sécurisé peut être établi **en ce que**, par l'intermédiaire du système d'exploitation de sécurité (200), une connexion directe entre l'élément (20) sécurisé et l'équipement à entrée vocale (10) et/ou l'équipement à sortie vocale (12) est établie.

4. Système à microprocesseur selon une des revendications précédentes, **caractérisé en ce que** l'élément (20) sécurisé est connecté de telle manière à un moyen d'affichage (22) que le moyen d'affichage (22) affiche le statut du canal (14) sécurisé.

5. Système à microprocesseur selon une des revendications précédentes, **caractérisé en ce que** le moyen d'affichage consiste en une LED.

6. Système à microprocesseur selon une des revendications précédentes, **caractérisé en ce que** l'élément (20) sécurisé consiste en une puce insérée à demeure dans le terminal (2) mobile, en une eUICC, en une carte SIM, en une carte SIM intégrée et/ou en une carte microSD enfichable.

7. Système à microprocesseur selon une des revendications précédentes, **caractérisé en ce que** le terminal mobile consiste en un appareil de radiocommunication mobile, en un smartphone, en un Personal Digital Assistant et/ou en une tablette PC.

8. Système à microprocesseur selon une des revendications précédentes, **caractérisé en ce que** l'interface full-duplex consiste en une interface SPI.

9. Système à microprocesseur selon une des revendications précédentes, **caractérisé en ce que** l'équipement à entrée vocale (10) consiste en un microphone du terminal mobile.

10. Système à microprocesseur selon une des revendications précédentes, **caractérisé en ce que** l'équipement à sortie vocale (12) consiste en un haut-parleur.

11. Terminal mobile ayant un système à microprocesseur selon une des revendications précédentes.
